# EUROPEAN PATENT SPECIFICATION

(11) **EP 3 819 751 B1**
(45) Date of publication and mention of the grant of the patent: **23.10.2024**
(21) Application number: 18931291.1
(22) Date of filing: 29.08.2018
(51) Int. Cl.: G06F 3/0488, G06F 3/041, G06F 3/01, G06F 3/0481

(54) **INFORMATION PROCESSING DEVICE AND INFORMATION PROCESSING METHOD**
INFORMATIONSVERARBEITUNGSVORRICHTUNG UND INFORMATIONSVERARBEITUNGSVERFAHREN
DISPOSITIF DE TRAITEMENT D'INFORMATIONS ET PROCÉDÉ DE TRAITEMENT D'INFORMATIONS

(43) Date of publication of application: 12.05.2021
(73) Proprietor: Sony Group Corporation, Tokyo 108-0075 (JP)
(72) Inventor: TAKAHASHI, Risa, Tokyo 140-0002 (JP); HASEGAWA, Takashi, Tokyo 140-0002 (JP); OZAWA, Yuumi, Tokyo 140-0002 (JP); KIMURA, Akitaka, Tokyo 140-0002 (JP); YABE, Ryo, Tokyo 140-0002 (JP); TSUCHIYA, Keishi, Tokyo 108-0075 (JP)
(74) Representative: D Young & Co LLP
(86) International application number: PCT/JP2018/032034
(87) International publication number: WO 2020/044479

(56) References cited:
- EP-A2- 2 175 344
- EP-A2- 2 706 447
- JP-A- 2012 174 251
- JP-A- 2012 194 810
- US-A1- 2011 169 749
- US-A1- 2017 038 957

## Description

### Field

The present disclosure relates to an information processing device and an information processing method.

### Background

Recently, a technology of supporting an operation by a finger of a user in a device having a touch panel has been developed. For example, in Patent Literature 1, a technology in which a position of a controller displayed on a screen is controlled on the basis of a position of a finger of a user which position is detected by a sensor included in a back surface of the device is disclosed.

### Citation List

### Patent Literature

Patent Literature 1: US 2013/0093680 A

### Summary

### Technical Problem

However, in the technology disclosed in Patent Literature 1, a device needs to additionally include a sensor to detect a finger. Also, there is a case where the technology disclosed in Patent Literature 1 cannot optimize an operation in a small device such as a smartphone used with one hand.

Thus, the present disclosure proposes an information processing device and an information processing method capable of reducing an operational burden of a small terminal that has a touch panel and that is used with one hand.

Prior art includes: EP 2 175 344 A2, US 2011/169749 A1, US 2017/038957 A1 and EP 2706447A2. Each of these prior art documents describes a prior art device.

### Solution to Problem

Embodiments of the present disclosure are defined by the appended claims.

### Advantageous Effects of Invention

As described above, according to the present disclosure, it becomes possible to reduce an operational burden of a small terminal that has a touch panel and that is used with one hand.

Note that the above effect is not necessarily a limitation, and any of the effects described in the present description, or other effects that can be grasped from the present description may be acquired in addition to or instead of the above effect.

### Brief Description of Drawings

FIG. 1 is a view illustrating an example of an external configuration of an information processing terminal 10 of the present disclosure.
FIG. 2 is a view for describing an example of a functional configuration of the information processing terminal 10 according to the embodiment.
FIG. 3 is a view illustrating an example of displaying an icon of an application on the basis of a detection position of a trigger operation on a side surface according to the embodiment.
FIG. 4 is a view illustrating an example of image photographing processing of a photographic application using the side surface according to the embodiment.
FIG. 5 is a view illustrating an example of moving image photographing processing of the photographic application on the side surface according to the embodiment.
FIG. 6 is a view for describing an example of determining a region to receive an operation on the side surface of the information processing terminal 10 according to the embodiment.
FIG. 7 is a view for describing an example of limiting a region to receive an operation on the side surface of the information processing terminal 10 according to the embodiment.
FIG. 8 is a view for describing an example of an operation using the side surface in a case where the information processing terminal 10 according to the embodiment is used in a horizontal direction.
FIG. 9 is a view for describing an example of an application starting processing based on an operation on the side surface of the information processing terminal 10 according to the embodiment.
FIG. 10 is a view for describing an example of an application starting processing based on an operation on the side surface of the information processing terminal 10 according to the embodiment.
FIG. 11 is a view for describing an example of a flow of an icon displaying operation according to the embodiment.
FIG. 12 is a view for describing an example of a flow of an image photographing operation by the photographic application according to the embodiment.
FIG. 13 is a view for describing an example of a flow of a moving image photographing operation by the photographic application according to the embodiment.
FIG. 14 is a view for describing an example of a flow of an operation of determining a region to receive an operation according to the embodiment.
FIG. 15 is a block diagram illustrating an example of a hardware configuration of the information processing terminal 10 according to an embodiment of the present disclosure.

### Description of Embodiments

Hereinafter, preferred embodiments of the present disclosure will be described in detail with reference to the accompanying drawings. Note that the same signs are assigned to components having substantially the same functional configurations in the present description and drawings, and overlapped description thereof is omitted.

Note that the description will be made in the following order.
1. Example of external configuration of information processing terminal 10
2. Example of functional configuration of information processing terminal 10
3. Detailed example
3-1. Example of screen display
3-2. Example of operation flow
4. Example of hardware configuration
5. Conclusion

### <1. Example of external configuration of information processing terminal 10>

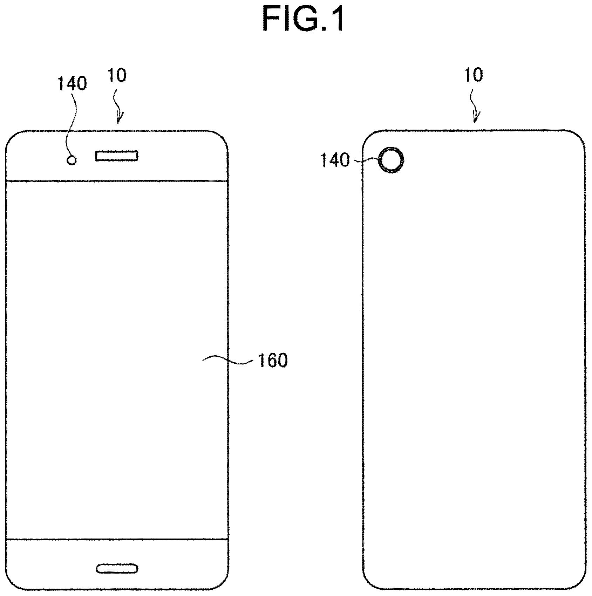

FIG. 1 is a view illustrating an example of an external configuration of an information processing terminal 10 of the present disclosure. On a left side of FIG. 1, a front surface of the information processing terminal 10 is illustrated. Also, a back surface of the information processing terminal 10 is illustrated on a right side of FIG. 1. The information processing terminal 10 is, for example, a smartphone. Also, the information processing terminal 10 may be a tablet terminal.

The information processing terminal 10 includes a display 160. The display 160 covers a sensor unit 110 (described later). With such a configuration, the information processing terminal 10 can detect a finger of a user in contact with the display 160. Note that the display 160 may cover a part or whole of a side surface of the information processing terminal 10.

Also, the information processing terminal 10 can control contents of a display screen on the basis of a user input. For example, the information processing terminal 10 can display execution information related to function execution of an application on the display 160 by using a so-called graphical user interface (GUI). Here, the execution information means visual information such as an icon causing an application to execute predetermined processing, a result of execution of the predetermined processing by the application, and the like.

The information processing terminal 10 includes, for example, a camera 140 and a display 160. Here, the camera 140 may be provided in one or both of the front surface and the back surface of the information processing terminal 10, as illustrated in FIG. 1.

### <2. Example of functional configuration of information processing terminal 10>

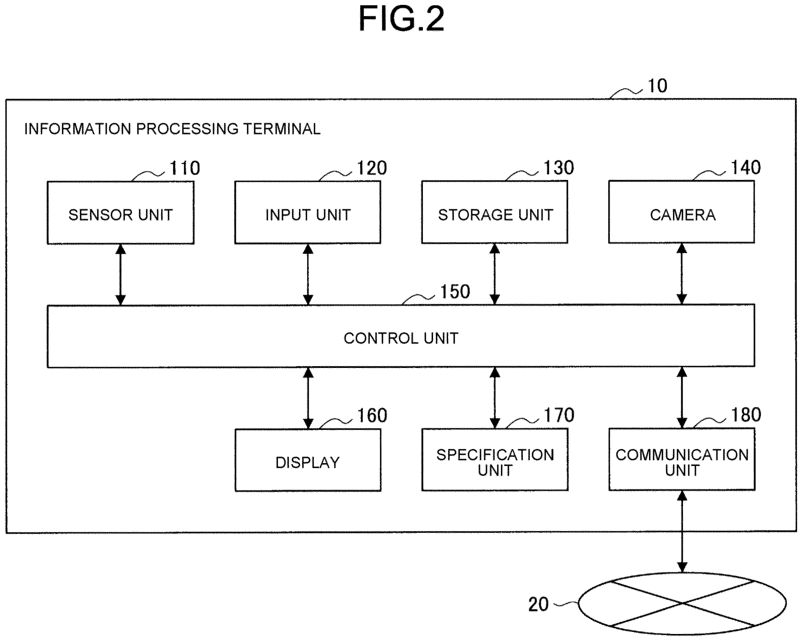

Next, an example of the functional configuration of the information processing terminal 10 according to the present embodiment will be described. FIG. 2 is a view for describing an example of the functional configuration of the information processing terminal 10 according to the present embodiment. As illustrated in FIG. 2, the information processing terminal 10 is an information processing device including a sensor unit 110, an input unit 120, a storage unit 130, a camera 140, a control unit 150, a display 160, a specification unit 170, and a communication unit 180.

### (Sensor unit 110)

The sensor unit 110 according to the present embodiment has a function of detecting a contact made by a finger of a user with the information processing terminal 10. Here, the sensor unit 110 can detect a position of the finger of the user in contact with the front surface and the side surface of the information processing terminal 10. Note that the sensor unit 110 is realized, for example, by a capacitance-type touch sensor or a pressure sensitive-type touch sensor. Note that in a case of the capacitance-type touch sensor, operation using a side surface may be realized without an arrangement of a touch sensor immediately below the side surface portion of the information processing terminal 10 by setting such that sensitivity of a touch sensor, which is arranged immediately below the front surface of the information processing terminal, in a direction of the side surface becomes high. In this case, when the sensitivity of the side surface portion of the information processing terminal 10 is set to be higher than that of a touch sensor in other regions, the operation using the side surface is realized.

Also, the sensor unit 110 may detect a position of an operating finger that executes a trigger operation. Here, the trigger operation means an operation for causing an application to execute predetermined processing, or an operation for causing a result of the execution of the predetermined processing by the application to be displayed. Also, the trigger operation specifically refers to a tap, double-tap, push, and the like. In addition, the operating finger means, among a plurality of fingers of a user that holds the information processing terminal 10, a finger that executes an operation on the display 160 in order to cause the application to execute predetermined processing.

### (Input unit 120)

The input unit 120 according to the present embodiment includes various sensors such as an acceleration sensor and a position information sensor, and has a function of acquiring data by using the various sensors. The input unit 120 provides the acquired data to the specification unit 170 (described later).

### (Storage unit 130)

The storage unit 130 according to the present embodiment is a storage area to temporarily or permanently store various kinds of programs and data. The storage unit 130 may store information related to various applications, for example. More specifically, for example, the storage unit 130 may store a program for executing an application, and management data to manage various settings and the like. Obviously, the above is merely an example, and a type of data stored in the storage unit 130 is not specifically limited.

### (Camera 140)

The camera 140 according to the present embodiment is used for photographing processing of an image or moving image under control of a photographic application. Here, the photographic application means an application capable of photographing an image or a moving image. Note that the camera 140 is provided in one or both of the front surface and the back surface of the information processing terminal 10.

### (Control unit 150)

The control unit 150 according to the present embodiment has a function of determining, on the basis of a detection position of an operating finger on the side surface of the information processing terminal 10 which position is detected by the sensor unit 110, a region to receive an operation by the operating finger. Also, here, the detection position of the operating finger means a position where an operation on the side surface of the information processing terminal 10 is executed among positions where the operation finger executes an operation on the information processing terminal 10.

A detailed description will be made. The control unit 150 determines a region to display predetermined information on a display screen on the basis of a detection position of an operating finger that executes a trigger operation on the side surface, the position being detected by the sensor unit 110. Also, the control unit 150 determines a region to receive a subsequent operation by the operating finger from a region, which is a combination of the display screen and the side surface, on the basis of the detection position of the operating finger that executes the trigger operation on the side surface which position is detected by the sensor unit 110. Here, on the basis of the detection position, the control unit 150 may determine a region assumed to be reached by the operating finger as a region to receive an operation.

Here, the subsequent operation means an operation executed on the region determined by the control unit 150 on the basis of the detection position of the operating finger that executes the trigger operation.

Note that there is a case where the control unit 150 determines a region to receive an operation by the operating finger on the basis of a detection position where the sensor unit 110 detects a finger other than the operating finger of the user.

In such a manner, by receiving the operation on the region assumed to be reached by a finger of the user, it is possible to reduce a burden on the user of an operation with respect to the information processing terminal 10.

Also, the control unit 150 may cause the display 160 to display execution information related to function execution of an application in a case where the sensor unit 110 detects that the trigger operation is executed by the operating finger on the side surface.

The control unit 150 has a function of causing various applications to execute predetermined processing on the basis of an operation related to function execution of the application by the finger of the user. The operation related to the function execution of the application includes, for example, a touch operation on an icon of the application. Also, the function execution of an application includes execution of functions unique for various applications.

For example, the control unit 150 can control photographing processing of the photographic application. More specifically, the control unit 150 can perform control in such a manner that the photographic application photographs an image or moving image with the camera 140. Also, the control unit 150 may cause the display 160 (described later) to display information related to the photographing processing. Here, the information related to the photographing processing means a preview image expressing a result of the photographing processing, a controller to control the photographing processing, and the like.

Also, the control unit 150 has a function of controlling each configuration included in the information processing terminal 10. The control unit 150 controls, for example, starting and stopping of each component.

### (Display 160)

The display 160 according to the present embodiment is a touch panel having a function of displaying execution information related to function execution of an application on a display screen under control by the control unit 150.

### (Specification unit 170)

The specification unit 170 according to the present embodiment has a function of specifying a predetermined application on the basis of predetermined criteria. Here, the predetermined criteria are, for example, current time, a current location, a frequency of use of various applications, and the like. For example, the specification unit 170 may specify an application used more frequently than other applications among various applications stored in the storage unit 130.

The specification unit 170 may specify an application by using a model constructed by machine learning of an operation by the user on the information processing terminal 10 or of predetermined criteria. The machine learning may be machine learning using a neural network such as deep learning. Note that the constructed model may be stored in the storage unit 130.

Also, the specification unit 170 may specify an application by using information acquired by machine learning from data that is related to terminal usage by a plurality of users and that is received from other devices via a network 20 (described later). Execution information related to the application may be displayed to the user by the display 160 controlled by the control unit 150.

### (Communication unit 180)

The communication unit 180 according to the present embodiment has a function of executing communication with other devices via the network 20 (described later). For example, the communication unit 180 may receive, from the other devices, information acquired by machine learning from the above-described data related to terminal usage by a plurality of users.

### (Network 20)

The network 20 according to the present embodiment has a function of connecting the components included in the information processing system. The network 20 may include the Internet, a public line network such as a telephone line network or a satellite communication network, various local area networks (LAN) including Ethernet (registered trademark), a wide area network (WAN), and the like. Also, the network 20 may include a leased line network such as an Internet protocol-virtual private network (IP-VPN). Also, the network 20 may include a wireless communication network such as Wi-Fi (registered trademark) or Bluetooth (registered trademark).

In the above, an example of a functional configuration of the information processing terminal 10 according to the present embodiment has been described. Note that the functional configuration described above with reference to FIG. 2 is merely an example, and the functional configuration of the information processing terminal 10 according to the present embodiment is not limited to this example. For example, the information processing terminal 10 does not necessarily include all of the configurations illustrated in FIG. 2. For example, the storage unit 130, the camera 140, and the specification unit 170 can be included in another device different from the information processing terminal 10. The functional configuration of the information processing terminal 10 according to the present embodiment can be flexibly modified according to specifications and operation.

Also, functions of the components may be executed when an arithmetic unit such as a central proccessing unit (CPU) reads a control program describing a processing procedure to realize these functions from a storage medium such as a read only memory (ROM) or a random access memory (RAM) storing the control program, and interprets and executes the program. Thus, it is possible to appropriately change a configuration to be used according to a technical level at the time of performance of the present embodiment. An example of a hardware configuration of the information processing terminal 10 will be described later.

### <3. Detailed example>

### <3-1. Example of screen display>

Next, an operation of the control unit 150 according to the present embodiment will be described in detail with a detailed example.

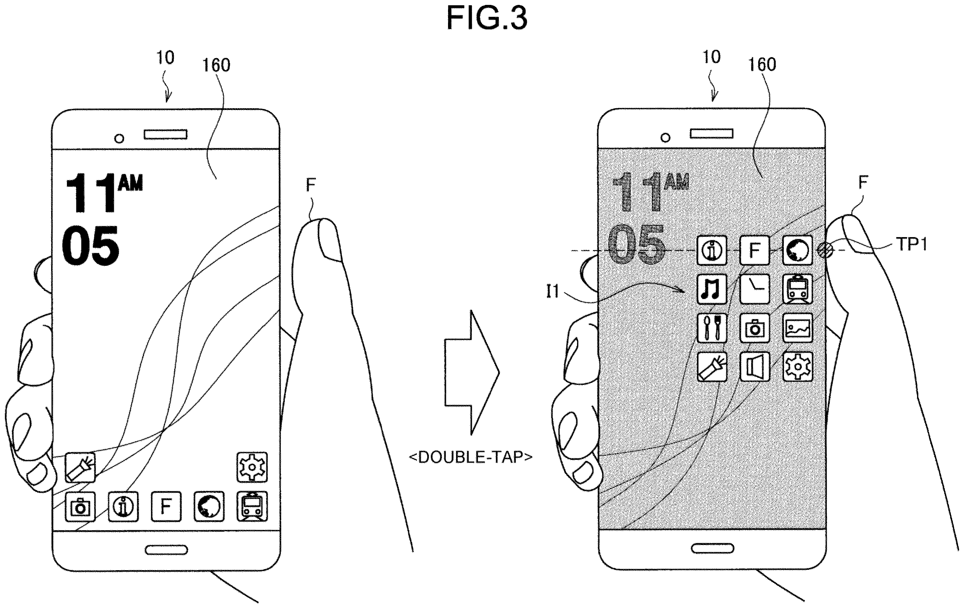

FIG. 3 is a view illustrating an example of displaying an icon of an application on the basis of a detection position of a trigger operation on the side surface according to the present embodiment. On a left side of FIG. 3, the information processing terminal 10 held by a hand of a user is illustrated. The information processing terminal 10 includes a display 160.

On the left side of FIG. 3, when a trigger operation is executed by an operating finger F on a side surface of the information processing terminal 10, the control unit 150 determines a region to display an icon of an application on the display 160, which is a display screen, on the basis of a detection position TP1 of the operating finger F. On a right side of FIG. 3, icons I1 of a plurality of applications are displayed on the display 160 as execution information related to function execution of the applications on the basis of the detection position.

In the example on the left side of FIG. 3, when the sensor unit 110 detects a double-tap operation executed by the operating finger F at a detection position TP1, the control unit 150 causes the display 160 to display the icons I1 of the plurality of applications.

In the example on the right side of FIG. 3, the control unit 150 causes the icons I1 of the plurality of applications to be displayed with a height on the display screen, which height corresponds to the detection position TP1 on the side surface, as the uppermost row. Here, the icons I1 are displayed in a region assumed to be reached by the operating finger F. Also, in the example on the right side of FIG. 3, the control unit 150 determines, as the region assumed to be reached by the operating finger F, a region on the right side of the entire display 160. Obviously, an arrangement of the icons displayed on the display screen by the control unit 150 is not limited to this example.

For example, in a case where the user executes, as the subsequent operation, a touch operation on any one of the icons I1 of the plurality of applications, the control unit 150 may execute starting processing of an application corresponding to an icon on which the touch operation is executed.

Also, an application related to a displayed icon can be specified by the specification unit 170 on the basis of predetermined criteria. The control unit 150 causes the display 160 to display icons I1 of a plurality of applications specified by the specification unit 170. Here, for example, the control unit 150 may cause the display 160 to display an icon of a more-frequently-used application at a high position on the display screen compared to compared to icons of other applications.

Note that in a case where the sensor unit 110 detects a slide operation by the operating finger F on the display screen, the control unit 150 may control the icons of the plurality of applications to scroll vertically, for example. By the control, even in a case where icons of many applications are displayed, the user can execute an operation related to the starting processing of an application.

In such a manner, the information processing terminal 10 can display icons of applications on the basis of a detection position of a finger of a user. With such a function, it becomes possible to reduce a burden on the user of the operation related to the starting processing of an application.

Note that with respect to the display 160 that is a display screen, the control unit 150 may also determine a region to display execution information related to an application that does not require a subsequent operation and that is, for example, a clock application or the like on the basis of the detection position TP1 of the operating finger F.

In the above, an example in which the information processing terminal 10 displays icons of applications has been described. Here, the information processing terminal 10 may execute processing related to an active application in a case where a trigger operation on the side surface of the information processing terminal 10 is detected.

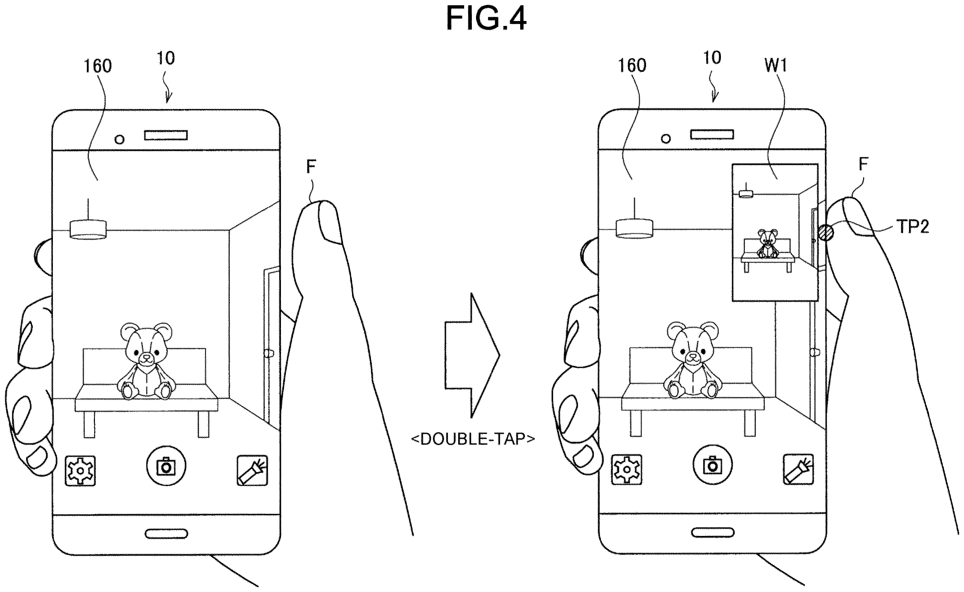

FIG. 4 is a view illustrating an example of image photographing processing by a photographic application using the side surface according to the present embodiment. In FIG. 4, the information processing terminal 10 in which the photographic application is active is illustrated.

On a left side of FIG. 4, a scenery projected by the camera 140 is displayed on the display 160. In a case where the sensor unit 110 detects execution of a trigger operation by the operating finger F on the side surface of the information processing terminal 10, the control unit 150 causes the photographic application to execute image photographing processing.

Here, for example, in a case where the sensor unit 110 detects execution of a double-tap operation, the control unit 150 may cause the photographic application to execute the photographing processing after a predetermined period. This is because the information processing terminal 10 shakes due to the double-tap immediately after the double-tap operation by the user and a still image with a blurred picture may be photographed even when the photographing processing is executed. Here, the control unit 150 may cause the display 160 to display a figure or a character of a predetermined icon (such as icon indicating that photographing processing is in progress) or the like on the basis of a detection position TP2 during standing by for elapse of the predetermined period before the photographic application starts executing the photographing processing. The displayed icon is hidden after the elapse of the predetermined period. Note that the standby and display of icons and the like after the double-tap operation are the similar in moving image photographing processing (described later).

On a right side of FIG. 4, the control unit 150 causes the display 160 to display, as a preview image W1, a result image photographed by the photographic application of the operating finger that executes the trigger operation on the side surface. Here, the preview image means, for example, a result that is acquired by execution of the photographing processing by the photographic application and that is for the user to check a photographed image or moving image. For example, a thumbnail image of a photographed image can be displayed as a preview image.

In the example on the right side of FIG. 4, the control unit 150 causes the display 160 to display the preview image W1 on the basis of the detection position TP2 of the operating finger that executes the double-tap operation on the side surface, the position being detected by the sensor unit 110. Here, the preview image W1 is displayed with a height on the display screen, which height corresponds to the detection position TP2, as a reference. Here, the control unit 150 causes the display 160 to make a display at a position and with a size assumed to be reached by the operating finger F.

Note that, for example, in a case where the sensor unit 110 detects an operation such as a touch by the operating finger F on the preview image W1, the control unit 150 may cause the image photographed by the photographic application to be displayed on the entire display 160. Note that the control unit 150 may cause the photographic application to stand by for a predetermined period before the photographic application is caused to execute the photographing processing after the trigger operation executed on the side surface by the operating finger is detected.

In such a manner, the information processing terminal 10 can photograph an image and display a preview image on the basis of the trigger operation by the operating finger on the side surface. With such a function, it becomes possible for the user to perform photographing while holding the information processing terminal without difficulty.

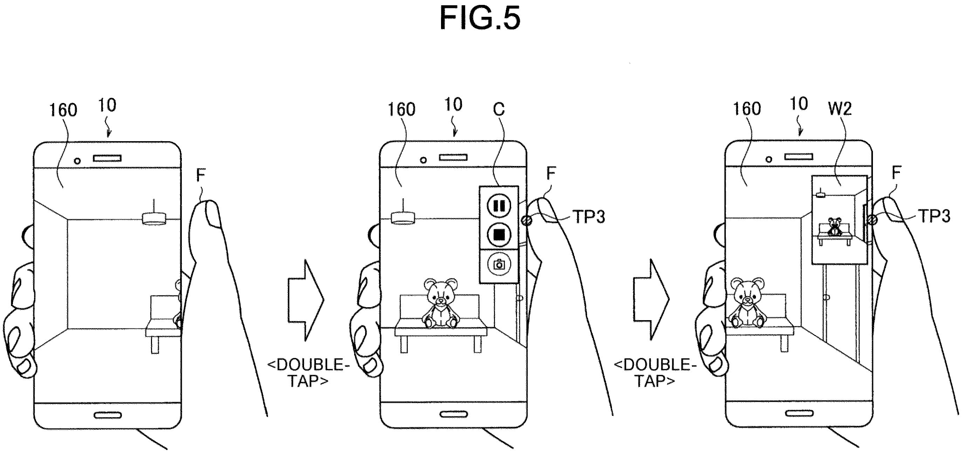

In the above, an example in which the information processing terminal 10 causes the photographic application to photograph an image has been described. However, application to an example of executing photographing of a moving image is also possible. FIG. 5 is a view illustrating an example of a moving image photographing processing of the photographic application on the side surface according to the present embodiment. In FIG. 5, the information processing terminal 10 in which the photographic application is active is illustrated.

On a left side of FIG. 5, a scenery is displayed on the display 160 by the camera 140. In a case where the sensor unit 110 detects execution of a trigger operation by the operating finger F on the side surface of the information processing terminal 10, the control unit 150 causes the photographic application to start photographing of a moving image.

In the middle of FIG. 5, the control unit 150 causes the photographic application to photograph a moving image. Also, during execution of the photographing, the control unit 150 causes the display 160 to display a controller C on the basis of a detection position TP3 at which the trigger operation is executed and which is detected by the sensor unit 110. Here, the controller is a button to control photographing processing by the photographic application. For example, in a case where the sensor unit 110 detects an operation by the operating finger F on a region in an upper part of the controller C, the control unit 150 may cause the photographic application to end the photographing of a moving image, for example. Also, in a case where an operation on a region at a center of the controller C is detected, for example, the photographing of a moving image by the photographic application may be temporarily stopped. Also, in a case where an operation on a region in a lower part of the controller C is detected, for example, the photographic application may be caused to execute photographing of a still image. Also, in a case where the sensor unit 110 detects a predetermined operation such as a double-tap operation by the operating finger F on the side surface, the control unit 150 may cause the photographic application to end the photographing of a moving image.

On a right side of FIG. 5, the control unit 150 causes the display 160 to display a preview image W2, which is a result moving image photographed by the photographic application, following the processing of ending the photographing of a moving image. Here, for example, the preview image W2 may be displayed on the display 160 with a height on the display screen, which height corresponds to a detection position TP3, as a reference. Also, for example, a thumbnail image corresponding to a first scene of a moving image can be displayed as the preview image W2.

In such a manner, the information processing terminal 10 can photograph a moving image and display a preview image on the basis of the trigger operation by the operating finger on the side surface. With such a function, it becomes possible for the user to perform moving image photographing while holding the information processing terminal without difficulty.

In the above, an example in which a region to receive an operation on the display screen is determined on the basis of a detection position of a trigger operation on the side surface of the information processing terminal 10 has been described. However, a region to receive an operation by a finger of a user on the side surface of the information processing terminal 10 may be determined on the basis of the detection position.

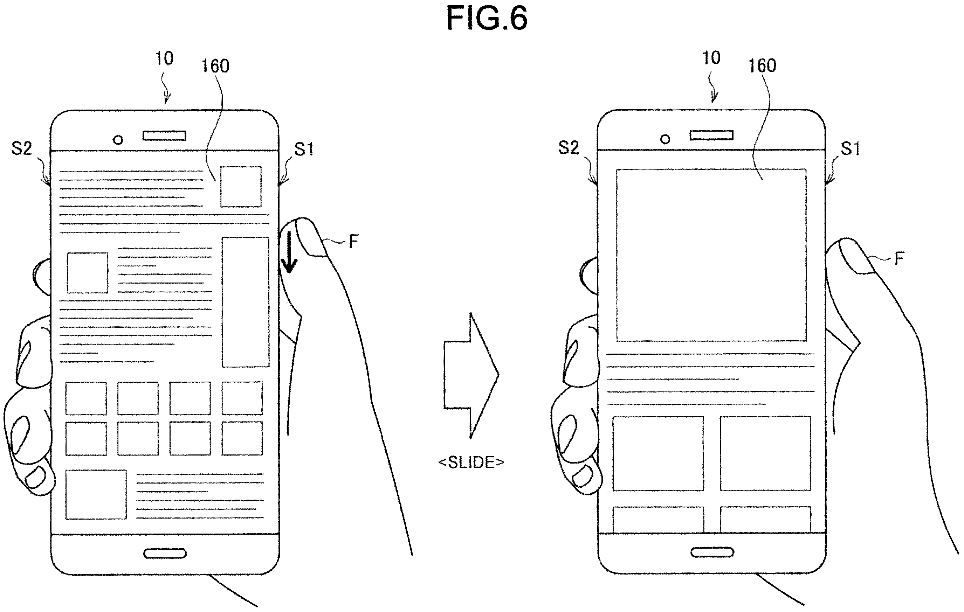

FIG. 6 is a view for describing an example of determining a region to receive an operation on the side surface of the information processing terminal 10 according to the present embodiment. In FIG. 6, the information processing terminal 10 held by a hand of a user is illustrated. Note that in the example of FIG. 6, the information processing terminal 10 causes the display 160 to display an active Internet browser.

In FIG. 6, the control unit 150 determines a position to receive an operation related to execution of an application on the side surface on the basis of a position of a finger of the user. In an example on a left side of FIG. 6, the control unit 150 is in a state of receiving an operation by a finger of the user only on a right side surface S1 of the information processing terminal 10. In other words, the control unit 150 is in a state of not receiving an operation by a finger of the user on a left side surface S2 of the information processing terminal 10. Here, when the user slides an operating finger F on the right side surface S1 of the information processing terminal 10, for example, the Internet browser executes "return" processing, for example.

In an example on the right side of FIG. 6, the control unit 150 causes the display 160 to display a previous page of a page displayed on the left side of FIG. 6.

Here, the control unit 150 may determine, as a region (side surface) to receive an operation related to function execution of an application, a side surface on which an operation is assumed to be executed by the operating finger of the user between the right and left side surfaces of the information processing terminal 10. Note that in a case of the example illustrated in FIG. 6, the operating finger is a thumb. The region may be manually set by the user.

In such a manner, it is possible to determine a region to receive an operation on the side surface of the information processing terminal 10. With such a function, it is possible to prevent erroneous generation of processing.

Also, processing executed by the control unit 150 in a case where the sensor unit 110 detects execution of an operation on the side surface is not limited to the above example. For example, the control unit 150 may execute processing of adjusting an output volume of the information processing terminal 10 in a case where the sensor unit 110 detects a slide operation on the side surface.

In the above, an example of determining a region to receive an operation on the side surface has been described. However, it is also possible to prevent erroneous generation of processing by limiting a region to receives an operation on the side surface.

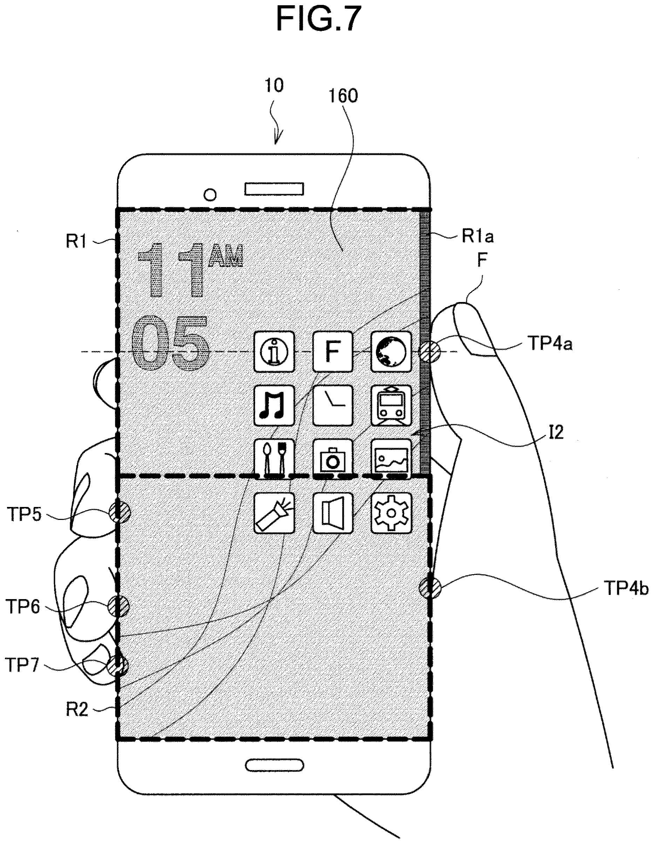

FIG. 7 is a view for describing an example of limiting a region to receive an operation on the side surface of the information processing terminal 10 according to the present embodiment. In FIG. 7, an information processing terminal 10 including a display 160 on which icons I2 of a plurality of applications are displayed is illustrated.

In FIG. 7, the control unit 150 limits a region to receive an operation by a finger of a user on a side surface with a height on a display screen, which height corresponds to a detection position of an operating finger on the side surface, as a reference.

In the example of FIG. 7, the control unit 150 determines a region R1 and a region R2 on the basis of a detection position TP4a of an operating finger F executing a trigger operation, which position is detected by the sensor unit 110, among detection positions TP4a, TP4b, and TP5 to TP7. Here, for example, as a region to receive an operation by a finger of the user, the control unit 150 determines that an operable side surface R1a that is a right side surface of the region R1 is a region assumed to be reached by the operating finger F. Also, the control unit 150 may determine, as a region not to receive an operation by a finger of the user, a left side surface of the region R1 and right and left side surfaces of the region R2, that is, a region other than the operable side surface R1a.

In the example of FIG. 7, a case where the trigger operation is executed by the operating finger F has been described. However, the control unit 150 determines a region R1 and a region R2 on the basis of a positional relationship between a plurality of fingers of a user which relationship is detected by the sensor unit 110, that is, a positional relationship between the detection positions TP4a, TP4b, and TP5 to TP7, for example.

In such a manner, it is possible to limit a region to receive an operation on the side surface, that is, a region in which the sensor unit 110 detects an operation on the side surface. With such a function, it becomes possible to efficiently prevent erroneous generation of processing according to a way how the information processing terminal 10 is held.

In FIG. 7, an example in which the control unit 150 limits a region to receive an operation on the side surface has been described. However, for example, the control unit 150 may limit a region to receive an operation on the display screen with a height on the display screen, which height corresponds to a detection position of an operating finger on the side surface, as a reference. Also, the control unit 150 may limit a region to receive an operation on each of the display screen and the side surface with the height as a reference. With such a function, it becomes also possible to prevent erroneous generation of processing of an operation by a finger of a user on the display screen.

In the above, an example of a case where the information processing terminal 10 is used in a vertical direction has been described. However, even in a case where the information processing terminal 10 is used in a horizontal direction, an operation using the side surface of the information processing terminal 10 is possible.

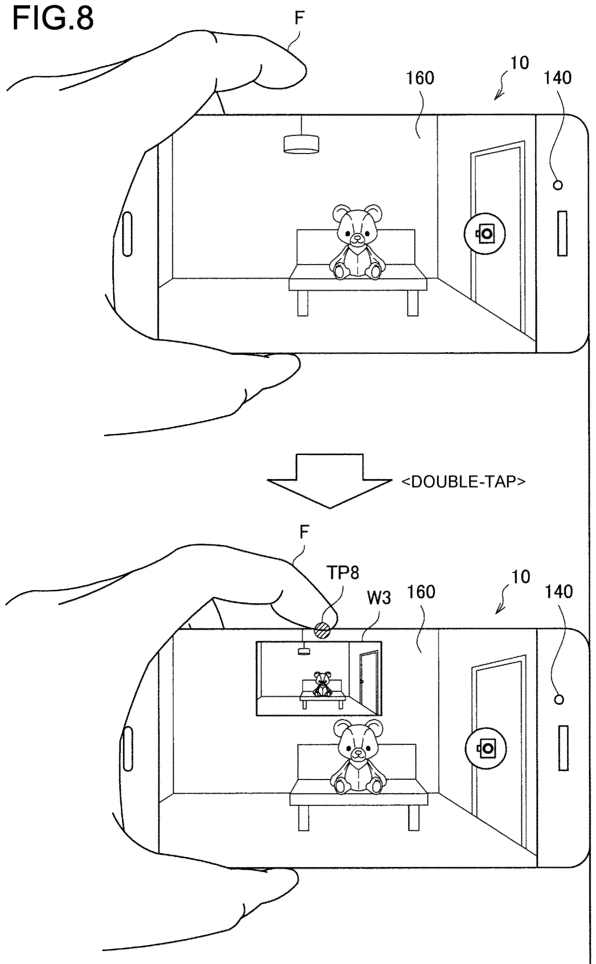

FIG. 8 is a view for describing an example of an operation on the side surface in a case where the information processing terminal 10 according to the present embodiment is used in the horizontal direction. In FIG. 8, the information processing terminal 10 in the horizontal direction in which terminal a photographic application is active is illustrated.

In an example in an upper part of FIG. 8, a scenery projected by the camera 140 is displayed on the display 160. In a case where the sensor unit 110 detects execution of a double-tap operation by an operating finger F on the side surface of the information processing terminal 10, the control unit 150 causes the photographic application to execute image photographing processing.

In an example in a lower part of FIG. 8, the control unit 150 causes the display 160 to display a result image photographing by the photographic application as a preview image W3. Here, the control unit 150 causes the display 160 to display the preview image W3 at a detection position TP8 where the sensor unit 110 detects the double-tap. As illustrated in the lower part of FIG. 8, in a case where the information processing terminal 10 is used in the horizontal direction, a position where the double-tap is executed is, for example, an upper side surface of the information processing terminal 10.

With such a function, even in a case where the information processing terminal 10 is used in the horizontal direction with one hand, it becomes possible to reduce a burden of the operation.

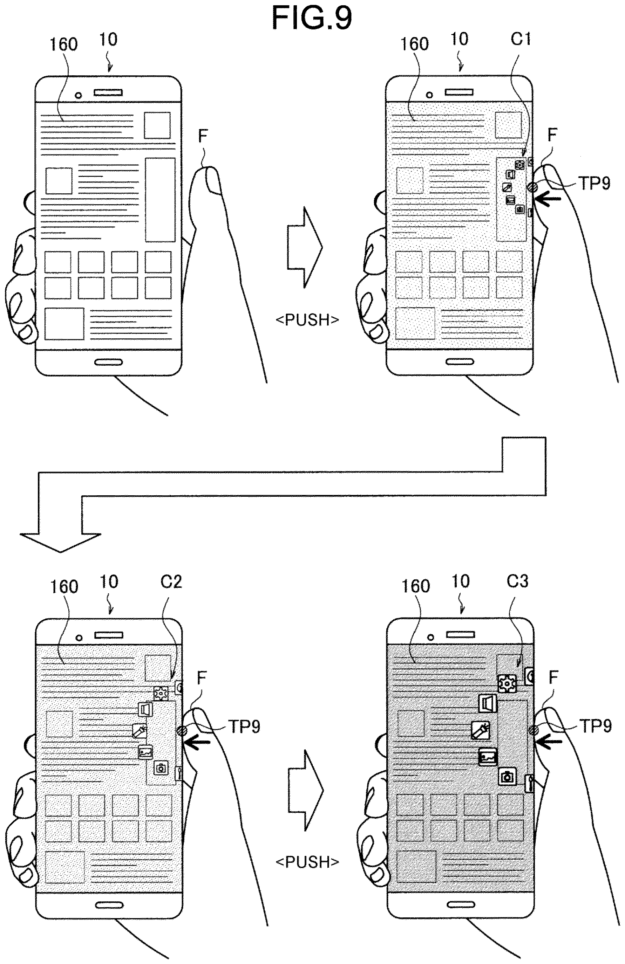

Also, the information processing terminal 10 according to the present embodiment can select an application to be started only on the basis of an operation on the side surface. FIG. 9 is a view for describing an example of application starting processing based on an operation on the side surface of the information processing terminal 10 according to the present embodiment. In FIG. 9, the information processing terminal 10 held by a hand of a user is illustrated.

In an upper left part of FIG. 9, the information processing terminal 10 is held by a hand of the user. Here, when the user executes a trigger operation on the side surface of the information processing terminal 10 by using an operating finger F, the control unit 150 causes the display 160 to display icons C1 of a plurality of applications on the basis of a detection position TP9 of the operating finger F executing the trigger operation, the position being detected by the sensor unit 110.

As illustrated in an upper right part of FIG. 9, the control unit 150 may cause the display 160 to display the icons C1 of the plurality of applications in a circular manner centered on the detection position TP9, for example.

Note that the control unit 150 may cause the display 160 to display icons C2 larger than the icons C1 of the plurality of applications in a case where the sensor unit 110 keeps detecting a pushing operation at the detection position TP9. Also, in a case where the sensor unit 110 keeps detecting the pushing operation at the detection position TP9, the control unit 150 causes the display 160 to display icons C3 larger than the icons C2 of the plurality of applications.

As described above, the information processing terminal 10 performs displaying in such a manner that icons of a plurality of applications become gradually larger in response to a pushing operation on the side surface by a finger of a user. Thus, the user can easily grasp a status of a series of operations related to the application starting processing.

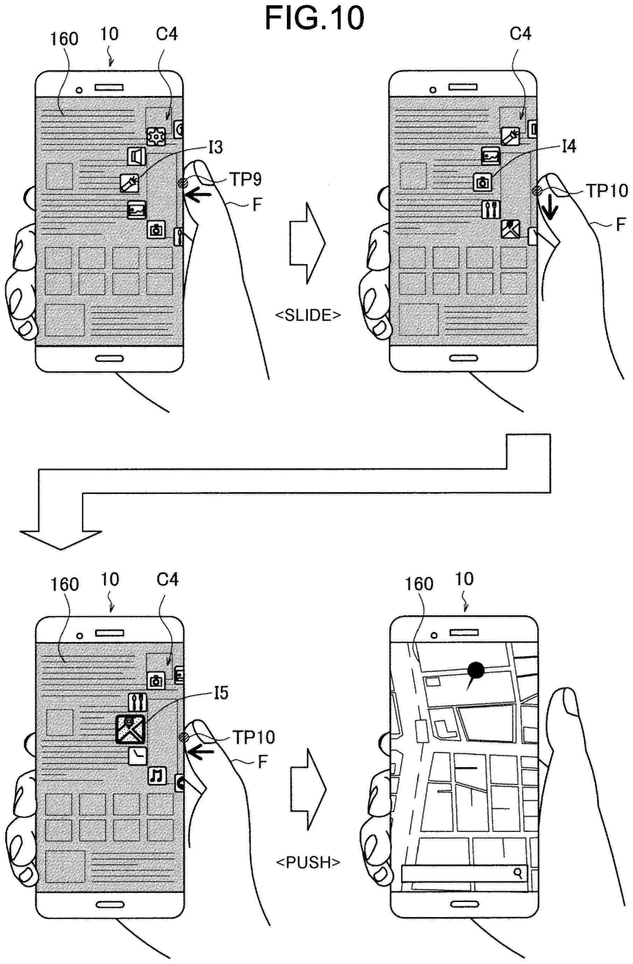

FIG. 10 is a view for describing an example of application starting processing based on an operation on the side surface of the information processing terminal 10 according to the present embodiment. In FIG. 10, the information processing terminal 10 held by a hand of a user is illustrated.

In an upper left part of FIG. 10, the display 160 displays icons C4 of a plurality of applications in a circular manner. Also, here, the user performs a slide operation with an operating finger F on the side surface of the information processing terminal 10. In response to detection of the slide operation via the sensor unit 110, the control unit 150 causes the display 160 to rotate and display the icons C4 of the plurality of applications displayed in the circular manner.

As illustrated in an upper right part of FIG. 10, since the control unit 150 rotates the icons C4, an icon 14 of an application is displayed at a left center of the circle. Here, the icon 14 of the application is different from an icon 13 of an application displayed at a left center of a circle in the upper left part of FIG. 10 Similarly, as illustrated in a lower left part of FIG. 10, an icon I5 of an application is different from the icon 14 of the application displayed at the left center of the circle in the upper left part of FIG. 10.

In the lower left part of FIG. 10, for example, in a case where the sensor unit 110 detects a pushing operation by an operating finger F at a detection position TP10 on the side surface of the information processing terminal 10, the control unit 150 executes starting processing of an application corresponding to the icon I5 displayed right next to the detection position TP10. Here, the control unit 150 may perform control such that the icon I5 is displayed larger than the other icons on the display 160, a color of the icon I5 is changed, or the like. By the control, it becomes easy for the user to grasp which icon of the plurality of icons the selected icon is.

Also, in the lower left part of FIG. 10, even in a case where the sensor unit 110 no longer detects a contact of the operating finger F on the side surface of the information processing terminal 10, in a case where a pushing operation by the operating finger F is subsequently detected on the side surface including TP10, the control unit 150 may execute starting processing of the application corresponding to the icon I5 Here, the control unit 150 may not execute the pushing operation, that is, the starting processing of the application corresponding to the icon I5 in a case where the sensor unit 110 detects the pushing operation at a position on the side surface which position is separated from the detection position TP10 for a predetermined distance or more. This is to prevent erroneous generation of application starting processing.

In the lower right part of FIG. 10, a screen of the application corresponding to the icon I5 is displayed on the display screen on the display 160.

In such a manner, the user can execute starting processing of the application without hiding the display 160 with a finger of the user, which display functions as the display screen, and without changing a position of an operating finger much. With such a function, it becomes possible to further reduce a burden of an operation by the finger of the user on the side surface of the information processing terminal 10.

An example in which application starting processing is executed only on the basis of an operation on the side surface has been described. Here, the information processing terminal 10 may execute screen switching processing of active applications only on the basis of an operation by an operating finger on the side surface. That is, icons displayed in a circular manner on the display 160 may be icons of active applications, and the control unit 150 can display a screen of a selected active application on the display 160.

### <3-2. Example of operation flow>

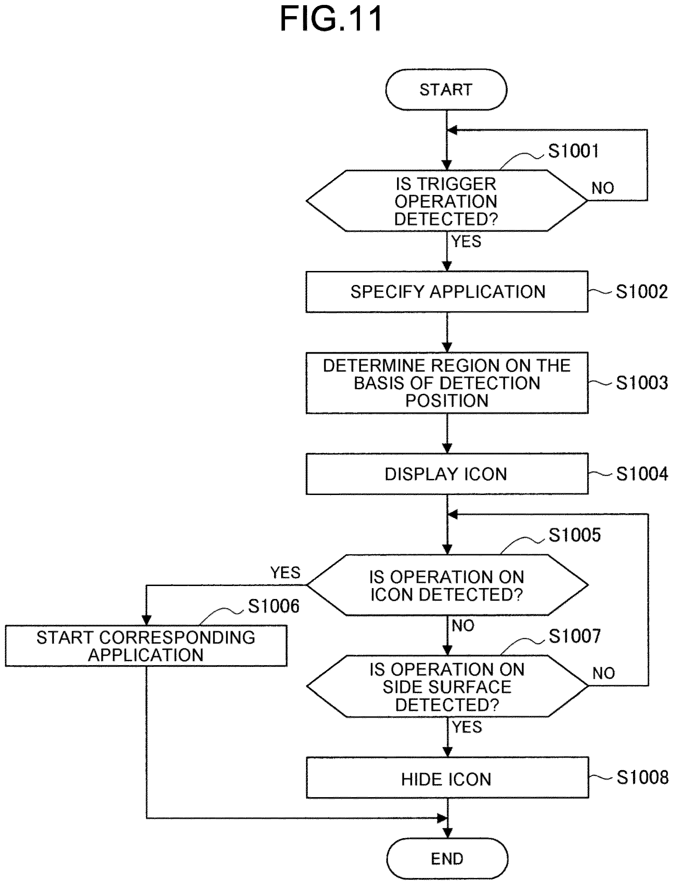

Next, an example of a flow of an operation of the information processing terminal 10 according to the present embodiment will be described. FIG. 11 is a view for describing an example of a flow of an icon displaying operation according to the present embodiment.

Referring to FIG. 11, first, it is determined whether the sensor unit 110 detects a trigger operation on a side surface of the information processing terminal 10 (S1001). In a case where the sensor unit 110 does not detect the trigger operation (S1001: NO), the operation returns to Step S1001. In a case where the sensor unit 110 detects the trigger operation (S1001: YES), the specification unit 170 specifies an application on the basis of predetermined criteria (S1002). Then, the control unit 150 determines a region to receive an operation by an operating finger on the basis of a height on the display screen which height corresponds to a detection position of the operating finger that executes the trigger operation (S1003).

Then, the control unit 150 causes an icon of an application to be displayed on the region determined in Step S1003 (S1004). Then, the sensor unit 110 determines whether an operation on the icon of the application which icon is displayed on the display screen of the information processing terminal 10 is detected (S1005). In a case where the operation on the icon is detected (S1005: YES), the control unit 150 executes starting processing of the application corresponding to the icon (S1006), and the operation is ended. On the one hand, in a case where the trigger operation on the icon is not detected (S1005: NO), it is determined whether an operation such as a double-tap on the side surface of the information processing terminal 10 is detected (S1007). In a case where the operation on the side surface is not detected (S1007: NO), the operation returns to Step S1005. In a case where a double-tap operation on the side surface is detected (S1007: YES), the icon displayed in Step S1004 is hidden (S1008), and the operation is ended.

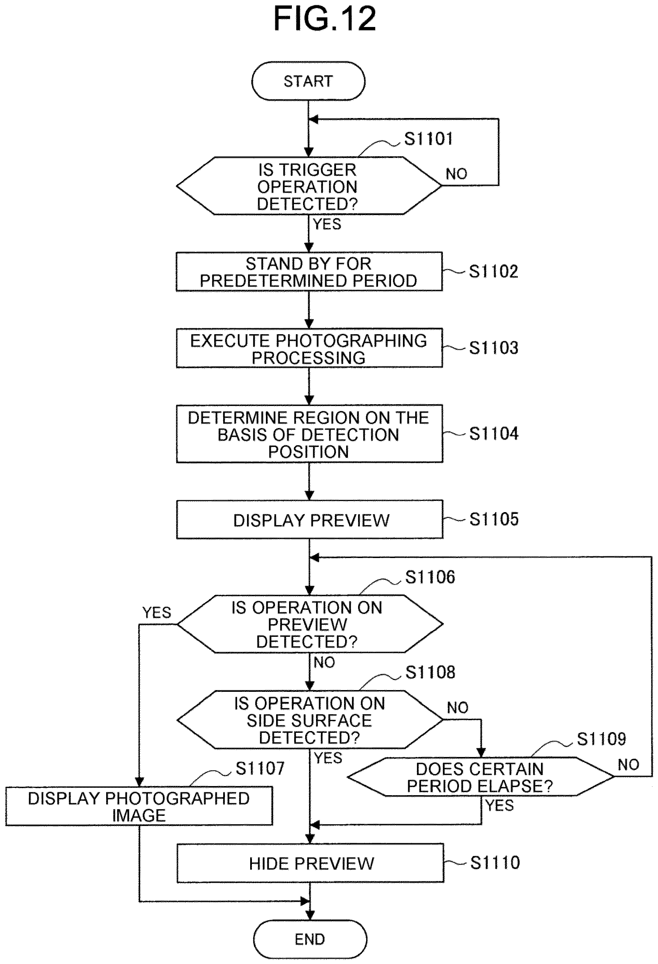

Next, an example of a flow of an image photographing operation by a photographic application according to the present embodiment will be described. FIG. 12 is a view for describing an example of a flow of an image photographing operation by the photographic application according to the present embodiment.

Referring to FIG. 12, first, it is determined whether the sensor unit 110 detects a trigger operation on the side surface of the information processing terminal 10 in a state in which the photographic application is active in the information processing terminal 10 (S1101). In a case where the trigger operation on the side surface is not detected (S1101: NO), the operation returns to Step S1101. In a case where the trigger operation on the side surface is detected (S1101: YES), the control unit 150 causes the photographic application to stand by for a predetermined period (S1102). Then, the control unit 150 causes the photographic application to execute the image photographing processing (S1103). Then, the control unit 150 determines a region to receive an operation by an operating finger on the basis of a height on the display screen, the height corresponding to a detection position at which the trigger operation is executed and which is detected by the sensor unit 110 in Step S1101 (S1104).

Then, the control unit 150 causes the region on the display 160, which region is determined in Step S1104, to display a preview image of the image photographed in Step S1103 (S1105). Then, it is determined whether the sensor unit 110 detects an operation on the preview image displayed on the display screen of the information processing terminal 10 (S1106). In a case where the sensor unit 110 detects an operation on the preview image (S1106: YES), the control unit 150 displays the image photographed in S1103 on the display screen (S1107), and the operation is ended.

On the one hand, in a case where the sensor unit 110 does not detect an operation on the preview image (S1106: NO), it is determined whether the sensor unit 110 detects an operation on the side surface of the information processing terminal 10 (S1108). In a case where the sensor unit 110 detects an operation on the side surface (S1108: YES), the control unit 150 hides the preview image (S1110), and the operation is ended. On the one hand, in a case where the sensor unit 110 does not detect an operation on the side surface (S1108: NO), the control unit 150 determines whether a certain period elapses after the preview image is displayed in Step S1105 (S1109). In a case where the certain period does not elapse (S1109: NO), the operation returns to Step S1106. On the one hand, in a case where the certain period elapses (S1109: YES), the control unit 150 hides the preview image (S1110), and the operation is ended.

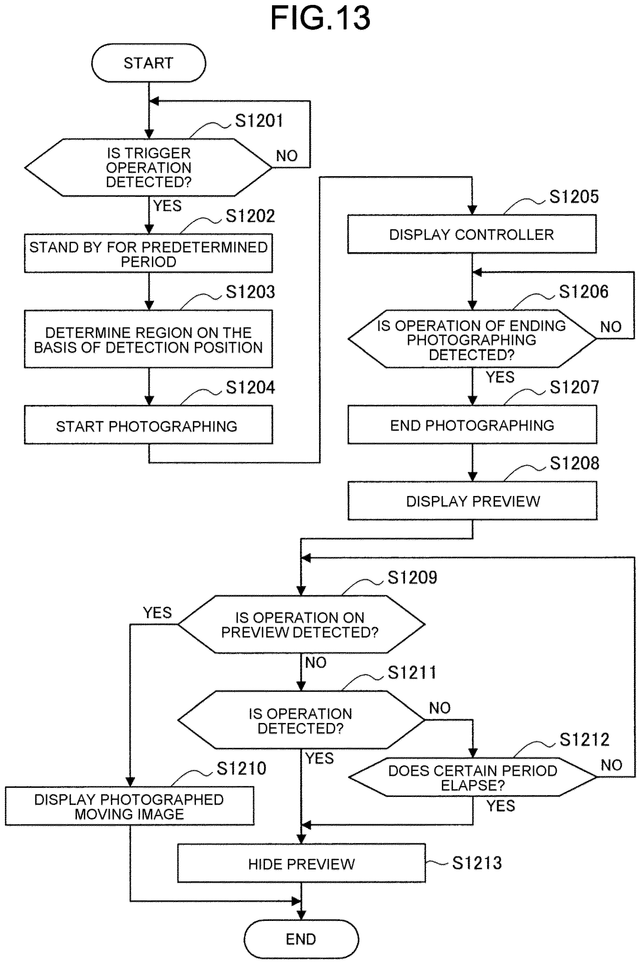

Next, an example of a flow of a moving image photographing operation by the photographic application according to the present embodiment will be described. FIG. 13 is a view for describing an example of a flow of a moving image photographing operation by the photographic application according to the present embodiment.

Referring to FIG. 13, it is determined whether the sensor unit 110 detects a trigger operation on the side surface of the information processing terminal 10 in a state in which the photographic application is active on the information processing terminal 10 (S1201). In a case where the sensor unit 110 does not detect the trigger operation (S1201: NO), the operation returns to Step S1201. In a case where the sensor unit 110 detects the trigger operation (S1201: YES), the control unit 150 causes the photographic application to stand by for a predetermined period (S1202). Then, a region to receive an operation by an operating finger is determined on the basis of a height on the display screen, the height corresponding to a detection position at which the trigger operation is executed and which is detected by the sensor unit 110 in Step S1201 (S1203).

Then, the control unit 150 causes the photographic application to start the moving image photographing processing (S1204). Then, the control unit 150 causes a controller to be displayed on the region determined in Step S1203 (S1205). Then, it is determined whether the sensor unit 110 detects an operation of ending the photographing by a predetermined operation on the side surface, an operation on a predetermined display region of the controller, or the like (S1206). In a case where the sensor unit 110 does not detect the operation of ending the photographing (S1206: NO), the operation returns to Step S1206. On the one hand, in a case where the sensor unit 110 detects the operation of ending the photographing (S1206: YES), the control unit 150 causes the photographic application to end the moving image photographing processing started in Step S1204 (S1207).

Then, the control unit 150 causes the region determined in Step S1203 to display a preview image of the moving image photographed by the photographic application in Step S1204 to Step S1207 (S1208). Then, the sensor unit 110 determines whether a subsequent operation is detected with respect to the preview image displayed on the display screen of the information processing terminal 10 (S1209). In a case where the sensor unit 110 detects the subsequent operation on the preview image (S1209: YES), the control unit 150 displays the moving image photographed between Step S1205 and Step S1207 on the display screen (S1210), and the operation is ended.

On the one hand, in a case where the sensor unit 110 does not detect the subsequent operation on the preview image (S1209: NO), it is determined whether an operation is detected on the side surface of the information processing terminal 10 (S1211). In a case where the operation on the side surface is detected by the sensor unit 110 (S1211: YES), the control unit 150 hides the preview image (S1213), and the operation is ended. On the one hand, in a case where the operation on the side surface is not detected (S1211: NO), the control unit 150 determines whether a certain period elapses since the preview image is displayed in Step S1105 (S1212). In a case where the certain period does not elapse (S1212: NO), the operation returns to Step S1209. On the one hand, in a case where the certain period elapses (S1212: YES), the control unit 150 hides the preview image (S1213), and the operation is ended.

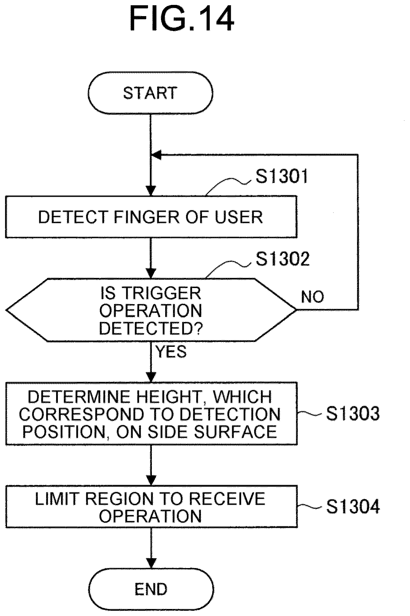

Next, an example of a flow of an operation of determining a region to receive an operation according to the present embodiment will be described. FIG. 14 is a view for describing an example of a flow of an operation of limiting a region to receive an operation according to the present embodiment.

Referring to FIG. 14, first, the sensor unit 110 detects a finger of a user on the side surface of the information processing terminal 10 (S1301). Then, it is determined whether the sensor unit 110 detects a trigger operation on the side surface in Step S1301 (S1302). In a case where the sensor unit 110 does not detect the trigger operation (S1302: NO), the operation returns to Step S1301. In a case where the sensor unit 110 detects the trigger operation (S1302: YES), the control unit 150 determines a height on the side surface which height corresponds to a detection position of the trigger operation (S1303). Then, the control unit 150 limits a region to receive an operation on the side surface on the basis of the height determined in Step S1303 and a position of a finger of the user (S1304). That is, an operable side surface is set.

### <4. Example of hardware configuration>

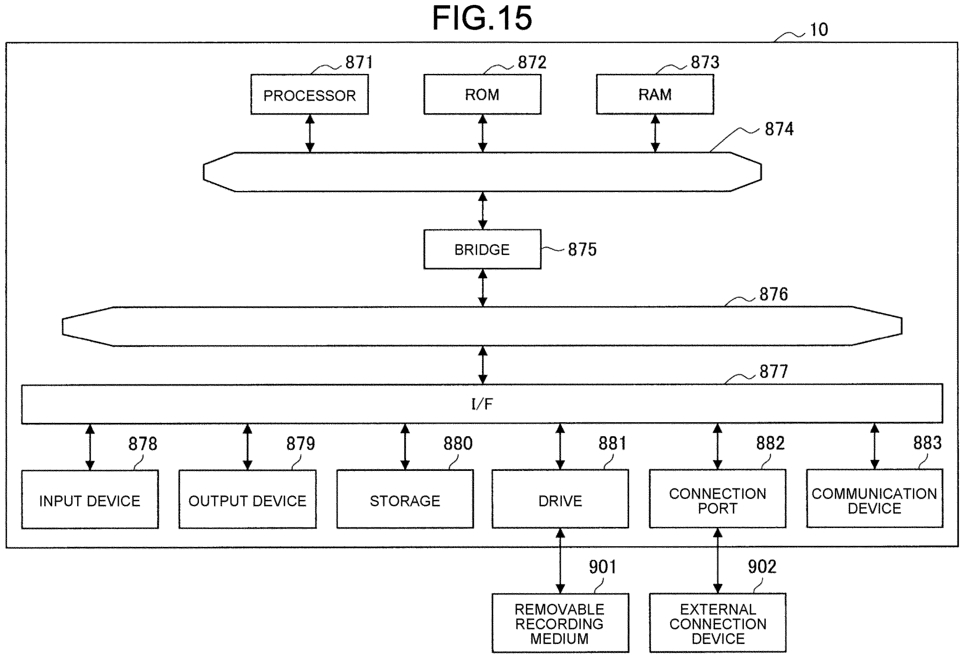

Next, an example of a hardware configuration of the information processing terminal 10 according to an embodiment of the present disclosure will be described. FIG. 15 is a block diagram illustrating an example of a hardware configuration of an information processing terminal 10 according to an embodiment of the present disclosure. Referring to FIG. 15, the information processing terminal 10 includes, for example, a processor 871, a ROM 872, a RAM 873, a host bus 874, a bridge 875, an external bus 876, an interface 877, an input device 878, an output device 879, a storage 880, a drive 881, a connection port 882, and a communication device 883. Note that the hardware configuration described here is an example, and a part of the components may be omitted. Also, a component other than the components described here may be further included.

### (Processor 871)

The processor 871 functions, for example, as an arithmetic processing device or a control device, and controls the overall operation of each component or a part thereof on the basis of various programs recorded in the ROM 872, the RAM 873, the storage 880, or a removable recording medium 901.

### (ROM 872 and RAM 873)

The ROM 872 is a means to store a program read by the processor 871, data used for calculation, and the like. The RAM 873 temporarily or permanently stores, for example, a program read by the processor 871, various parameters that appropriately change in execution of the program, and the like.

### (Host bus 874, bridge 875, external bus 876, and interface 877)

The processor 871, ROM 872, and RAM 873 are connected to each other, for example, via the host bus 874 capable of high-speed data transmission. On the one hand, the host bus 874 is connected to the external bus 876, which has a relatively low data transmission rate, via the bridge 875, for example. Also, the external bus 876 is connected to various components via the interface 877.

### (Input device 878)

As the input device 878, for example, a mouse, a keyboard, a touch panel, a button, a switch, a lever, or the like is used. Furthermore, there is a case where a remote controller (hereinafter, remote controller) capable of transmitting a control signal by using infrared rays or other radio waves is used as the input device 878. Also, the input device 878 includes a voice input device such as a microphone.

### (Output device 879)

The output device 879 is a device that can visually or audibly notify a user of acquired information and is, for example, a display device such as a cathode ray tube (CRT), an LCD, or an organic EL, an audio output device such as a speaker or headphone, a printer, a mobile phone, a facsimile, or the like. Also, the output device 879 according to the present disclosure includes various vibration devices capable of outputting tactile stimulation.

### (Storage 880)

The storage 880 is a device to store various kinds of data. As the storage 880, for example, a magnetic storage device such as a hard disk drive (HDD), a semiconductor storage device, an optical storage device, a magneto-optical storage device, or the like is used.

### (Drive 881)

The drive 881 is a device to read information recorded on the removable recording medium 901 such as a magnetic disk, an optical disk, a magneto-optical disk, or a semiconductor memory, or to write information on the removable recording medium 901.

### (Removable recording medium 901)

The removable recording medium 901 is, for example, a DVD medium, a Blu-ray (registered trademark) medium, an HD DVD medium, various semiconductor storage media, or the like. Obviously, the removable recording medium 901 may be, for example, an IC card equipped with a non-contact type IC chip, an electronic device, or the like.

### (Connection port 882)

The connection port 882 is a port to connect an external connection device 902 and is, for example, a universal serial bus (USB) port, an IEEE 1394 port, a small computer system interface (SCSI), an RS-232C port, an optical audio terminal, or the like.

### (External connection device 902)

The external connection device 902 is, for example, a printer, a portable music player, a digital camera, a digital video camera, an IC recorder, or the like.

### (Communication device 883)

The communication device 883 is a communication device for connection to a network and is, for example, a communication card for a wired or wireless LAN, Bluetooth (registered trademark), or a wireless USB (WUSB), a router for optical communication, a router for an asymmetric digital subscriber line (ADSL), a modem for various kinds of communication, or the like.

### <5. Conclusion>

As described above, an information processing terminal 10 according to an embodiment of the present disclosure has a function of determining a region to receive an operation on a display screen and a side surface on the basis of a detection position of an operating finger on the side surface. With such a function, it becomes possible to reduce a burden of an operation related to a small terminal that includes a touch panel and that is used with one hand.

Preferred embodiments of the present disclosure have been described above in detail with reference to the accompanying drawings. However, the technical scope of the present disclosure is not limited to such examples. It is obvious that a person having ordinary knowledge in the technical field of the present disclosure can come up with various changes or modifications within the scope of the technical idea described in claims. Obviously, it is understood that these also belong to the technical scope of the present disclosure.

Also, the effects described in the present description are merely descriptions or examples, and are not limitations. That is, the technology according to the present disclosure may have other effects that are apparent to those skilled in the art from a description of the present description in addition to or instead of the above effects.

### Reference Signs List

- 10: information processing terminal
- 110: sensor unit
- 120: input unit
- 130: storage unit
- 140: camera
- 150: control unit
- 160: display
- 170: specification unit
- 180: communication unit
- 20: network

## Claims

1. An information processing device (10) comprising:
a sensor unit (110) configured to detect a contact of a finger of a user with the information processing device; and
a control unit (150) that is configured to determine, on the basis of a detection position of an operating finger of a user on a side surface of the information processing device with respect to a display screen (160) of the information processing device, a region to display predetermined information on the display screen, and that is configured to determine, on the basis of the detection position, a region to receive an operation by the operating finger from a region that is a combination of the display screen and the side surface; wherein
the control unit is configured to determine a region to display predetermined information on the display screen on the basis of the detection position of the operating finger executing a trigger operation on the side surface, and determine, on the basis of the detection position, a region (R1) to receive a subsequent operation by the operating finger from the region that is the combination of the display screen and the side surface; and
the control unit is configured to determine, on the basis of a positional relationship between a plurality of fingers of a user which relationship is detected by the sensor unit (110), the region (R1) to receive the subsequent operation and a region (R2) not to receive an operation by a finger of the user.

2. The information processing device according to claim 1, wherein
the predetermined information is execution information related to function execution of an application, and
in a case where the trigger operation by the operating finger is detected on the side surface, the control unit is configured to determine a region to display the execution information on the basis of the detection position of the trigger operation.

3. The information processing device according to claim 2, wherein
the execution information includes an icon related to at least one application specified on the basis of a predetermined criterion, and
the control unit is configured to determine a region to display the icon on the basis of the detection position of the operating finger that executes the trigger operation on the side surface.

4. The information processing device according to claim 3, wherein
the control unit is configured to determine a region to display the icon on the basis of the detection position of the operating finger that executes the trigger operation on the side surface, and determine, as the region to receive the subsequent operation by the operating finger, a region within a predetermined range with the detection position as a reference.

5. The information processing device according to claim 2, wherein
the control unit is configured to cause the application to execute predetermined processing on the basis of the subsequent operation by the operating finger on the region to receive the operation.

6. The information processing device according to claim 5, wherein,
the application is a photographic application, and
the control unit is configured to cause the photographic application to execute photographing processing on the basis of the operation by the operating finger on the side surface.

7. The information processing device according to claim 6, wherein,
the execution information includes a preview image of an image photographed by the photographic application, and
the control unit is configured to cause the preview image to be displayed on the basis of the detection position of the operating finger that executes the trigger operation on the side surface.

8. The information processing device according to claim 6, wherein
the execution information includes a controller that controls the photographing processing, and
the control unit is configured to cause the controller to be displayed on the basis of the detection position of the operating finger that executes the trigger operation on the side surface.

9. The information processing device according to claim 6, wherein
the control unit is configured to cause the photographic application to execute the photographing processing after a predetermined period elapses from the detection of the trigger operation executed by the operating finger on the side surface.

10. The information processing device according to claim 1, wherein,
the control unit is configured to determine the region to receive the subsequent operation on the side surface on the basis of the detection position of a finger of the user on the side surface.

11. The information processing device according to claim 1, wherein
the control unit is configured to limit the region to receive the operation by the operating finger on the side surface with a height at the detection position of the operating finger on the side surface as a reference.

12. An information processing method comprising:
detecting, by a sensing unit (110), a contact of a finger of a user with an information processing device;
determining, on the basis of a detection position of an operating finger of a user on a side surface of the information processing device (10) with respect to a display screen (160) of the information processing device, a region to display predetermined information on the display screen, and determining, on the basis of the detection position, a region to receive an operation by the operating finger from a region that is a combination of the display screen and the side surface,
the determining being performed by a processor (150);
determining a region to display predetermined information on the display screen on the basis of the detection position of the operating finger executing a trigger operation on the side surface, and determining, on the basis of the detection position, a region (R1) to receive a subsequent operation by the operating finger from the region that is the combination of the display screen and the side surface; and
determining, on the basis of a positional relationship between a plurality of fingers of a user which relationship is detected by the sensor unit (110), the region (R1) to receive the subsequent operation and a region (R2) not to receive an operation by a finger of the user.

## Patentansprüche

1. Informationsverarbeitungsvorrichtung (10), umfassend:
eine Sensoreinheit (110), die dazu konfiguriert ist, einen Kontakt eines Fingers eines Benutzers mit der Informationsverarbeitungsvorrichtung zu erkennen; und
eine Steuereinheit (150), die dazu konfiguriert ist, auf der Grundlage einer Erkennungsposition eines Bedienfingers eines Benutzers auf einer Seitenfläche der Informationsverarbeitungsvorrichtung in Bezug auf einen Anzeigebildschirm (160) der Informationsverarbeitungsvorrichtung einen Bereich zum Anzeigen vorgegebener Informationen auf dem Anzeigebildschirm zu bestimmen, und die dazu konfiguriert ist, auf der Grundlage der Erkennungsposition einen Bereich zum Empfangen einer Operation durch den Bedienfinger aus einem Bereich zu bestimmen, der eine Kombination aus dem Anzeigebildschirm und der Seitenfläche ist; wobei
die Steuereinheit dazu konfiguriert ist, auf Grundlage der Erkennungsposition des Bedienfingers, der eine Auslöseoperation auf der Seitenfläche ausführt, einen Bereich zum Anzeigen vorgegebener Informationen auf dem Anzeigebildschirm zu bestimmen und auf Grundlage der Erkennungsposition einen Bereich (R1) zum Empfangen einer nachfolgenden Operation durch den Bedienfinger aus dem Bereich zu bestimmen, der die Kombination aus Anzeigebildschirm und Seitenfläche ist; und
die Steuereinheit dazu konfiguriert ist, auf Grundlage einer von der Sensoreinheit (110) erfassten Positionsbeziehung zwischen einer Vielzahl von Fingern eines Benutzers den Bereich (R1) zu bestimmen, der die nachfolgende Operation empfangen soll, und einen Bereich (R2), der keine Operation durch einen Finger des Benutzers empfangen soll.

2. Informationsverarbeitungsvorrichtung nach Anspruch 1, wobei
die vorgegebenen Informationen Ausführungsinformationen sind, die sich auf die Funktionsausführung einer Anwendung beziehen, und
in einem Fall, in dem die Auslöseoperation durch den Bedienfinger auf der Seitenfläche erkannt wird, die Steuereinheit so konfiguriert ist, dass sie einen Bereich zur Anzeige der Ausführungsinformationen auf Grundlage der Erkennungsposition der Auslöseoperation bestimmt.

3. Informationsverarbeitungsvorrichtung nach Anspruch 2, wobei
die Ausführungsinformationen ein Symbol einschließen, das sich auf mindestens eine Anwendung bezieht, die auf der Grundlage eines vorgegebenen Kriteriums spezifiziert wird, und
die Steuereinheit dazu konfiguriert ist, einen Bereich zur Anzeige des Symbols auf Grundlage der Erkennungsposition des Bedienfingers zu bestimmen, der die Auslöseoperation auf der Seitenfläche ausführt.

4. Informationsverarbeitungsvorrichtung nach Anspruch 3, wobei
die Steuereinheit dazu konfiguriert ist, einen Bereich zum Anzeigen des Symbols auf Grundlage der Erkennungsposition des Bedienfingers zu bestimmen, der die Auslöseoperation auf der Seitenfläche ausführt, und als den Bereich zum Empfangen der nachfolgenden Operation durch den Bedienfinger einen Bereich innerhalb eines vorgegebenen Bereichs mit der Erkennungsposition als Referenz zu bestimmen.

5. Informationsverarbeitungsvorrichtung nach Anspruch 2, wobei
die Steuereinheit dazu konfiguriert ist, die Anwendung zu veranlassen, auf Grundlage der nachfolgenden Betätigung durch den Bedienfinger in dem Bereich, der die Betätigung empfangen soll, eine vorgegebene Verarbeitung auszuführen.

6. Informationsverarbeitungsvorrichtung nach Anspruch 5, wobei
es sich bei der Anwendung um eine fotografische Anwendung handelt, und
die Steuereinheit so konfiguriert ist, dass sie die fotografische Anwendung veranlasst, auf Grundlage der Operation durch den Bedienfinger auf der Seitenfläche eine fotografische Verarbeitung auszuführen.

7. Informationsverarbeitungsvorrichtung nach Anspruch 6, wobei
die Ausführungsinformationen ein Vorschaubild eines von der fotografischen Anwendung fotografierten Bildes einschließen, und
die Steuereinheit dazu ausgebildet ist, die Anzeige des Vorschaubildes auf Grundlage der Erfassungsposition des Bedienfingers, der die Auslöseoperation auf der Seitenfläche ausführt, zu veranlassen.

8. Informationsverarbeitungsvorrichtung nach Anspruch 6, wobei
die Ausführungsinformationen eine Steuerung einschließen, die die fotografische Verarbeitung steuert, und
die Steuereinheit dazu konfiguriert ist, die Anzeige der Steuerung auf Grundlage der Erkennungsposition des Bedienfingers, der die Auslöseoperation auf der Seitenfläche ausführt, zu veranlassen.

9. Informationsverarbeitungsvorrichtung nach Anspruch 6, wobei
die Steuereinheit so konfiguriert ist, dass sie die fotografische Anwendung veranlasst, die fotografische Verarbeitung auszuführen, nachdem seit der Erkennung der durch den Bedienfinger auf der Seitenfläche ausgeführten Auslöseoperation eine vorgegebene Zeitspanne verstrichen ist.

10. Informationsverarbeitungsvorrichtung nach Anspruch 1, wobei
die Steuereinheit dazu konfiguriert ist, den Bereich zum Empfangen der nachfolgenden Operation auf der Seitenfläche auf Grundlage der Erkennungsposition eines Fingers des Benutzers auf der Seitenfläche zu bestimmen.

11. Informationsverarbeitungsvorrichtung nach Anspruch 1, wobei
die Steuereinheit dazu konfiguriert ist, den Bereich zum Empfangen der Operation durch den Bedienfinger auf der Seitenfläche mit einer Höhe an der Erkennungsposition des Bedienfingers auf der Seitenfläche als Referenz einzuschränken.

12. Informationsverarbeitungsverfahren, umfassend:
Erkennen einer Berührung eines Fingers eines Benutzers mit einer Informationsverarbeitungsvorrichtung durch eine Sensoreinheit (110);
Bestimmen eines Bereichs zum Anzeigen vorgegebener Informationen auf dem Anzeigebildschirm auf der Grundlage einer Erkennungsposition eines Bedienfingers eines Benutzers auf einer Seitenfläche der Informationsverarbeitungsvorrichtung (10) in Bezug auf einen Anzeigebildschirm (160) der Informationsverarbeitungsvorrichtung, und Bestimmen eines Bereichs zum Empfangen einer Operation durch den Bedienfinger aus einem Bereich, der eine Kombination aus dem Anzeigebildschirm und der Seitenfläche ist, auf der Grundlage der Erkennungsposition,
wobei die Bestimmung durch einen Prozessor (150) durchgeführt wird; Bestimmen eines Bereichs zum Anzeigen vorgegebener Informationen auf dem Anzeigebildschirm auf der Grundlage der Erfassungsposition des Bedienfingers, der eine Auslöseoperation auf der Seitenfläche ausführt, und Bestimmen eines Bereichs (R1) zum Empfangen einer nachfolgenden Operation durch den Bedienfinger auf der Grundlage der Erfassungsposition aus dem Bereich, der die Kombination aus Anzeigebildschirm und Seitenfläche ist; und
Bestimmen des Bereichs (R1), der die nachfolgende Operation empfangen soll, und eines Bereichs (R2), der keine Operation durch einen Finger des Benutzers empfangen soll, auf der Grundlage einer Positionsbeziehung zwischen einer Vielzahl von Fingern eines Benutzers, die von der Sensoreinheit (110) erkannt wird.

## Revendications

1. Dispositif de traitement d'informations (10) comprenant :
une unité de détection (110) configurée pour détecter un contact d'un doigt d'un utilisateur avec le dispositif de traitement d'informations ; et
une unité de commande (150) qui est configurée pour déterminer, sur la base d'une position de détection d'un doigt d'actionnement d'un utilisateur sur une surface latérale du dispositif de traitement d'informations par rapport à un écran d'affichage (160) du dispositif de traitement d'informations, une région devant afficher des informations prédéterminées sur l'écran d'affichage, et qui est configurée pour déterminer, sur la base de la position de détection, une région devant recevoir une opération par le doigt d'actionnement en provenance d'une région qui est une combinaison de l'écran d'affichage et de la surface latérale ; dans lequel
l'unité de commande est configurée pour déterminer une région devant afficher des informations prédéterminées sur l'écran d'affichage sur la base de la position de détection du doigt d'actionnement exécutant une opération de déclenchement sur la surface latérale, et pour déterminer, sur la base de la position de détection, une région (R1) devant recevoir une opération ultérieure par le doigt d'actionnement en provenance de la région qui est la combinaison de l'écran d'affichage et de la surface latérale ; et
l'unité de commande est configurée pour déterminer, sur la base d'une relation de position entre une pluralité de doigts d'un utilisateur, laquelle relation étant détectée par l'unité de détection (110), la région (R1) devant recevoir l'opération subséquente et une région (R2) ne devant pas recevoir d'opération par un doigt de l'utilisateur.

2. Dispositif de traitement d'informations selon la revendication 1, dans lequel
les informations prédéterminées sont des informations d'exécution relatives à une exécution de fonction d'une application, et
dans le cas où l'opération de déclenchement par le doigt d'actionnement est détectée sur la surface latérale, l'unité de commande est configurée pour déterminer une région devant afficher des informations d'exécution sur la base de la position de détection de l'opération de déclenchement.

3. Dispositif de traitement d'informations selon la revendication 2, dans lequel
les informations d'exécution comportent une icône liée à au moins une application spécifiée sur la base d'un critère prédéterminé, et
l'unité de commande est configurée pour déterminer une région devant afficher l'icône sur la base de la position de détection du doigt d'actionnement qui exécute l'opération de déclenchement sur la surface latérale.

4. Dispositif de traitement d'informations selon la revendication 3, dans lequel
l'unité de commande est configurée pour déterminer une région devant afficher l'icône sur la base de la position de détection du doigt d'actionnement qui exécute l'opération de déclenchement sur la surface latérale, et pour déterminer, en tant que région devant recevoir l'opération ultérieure par le doigt d'actionnement, une zone située dans une plage prédéterminée, la position de détection servant de référence.

5. Dispositif de traitement d'informations selon la revendication 2, dans lequel
l'unité de commande est configurée pour amener l'application à exécuter un traitement prédéterminé sur la base de l'opération ultérieure par le doigt d'actionnement sur la région devant recevoir l'opération.

6. Dispositif de traitement d'informations selon la revendication 5, dans lequel
l'application est une application de photographie, et
l'unité de commande est configurée pour amener l'application de photographe à exécuter un traitement de photographie sur la base de l'opération par le doigt d'actionnement sur la surface latérale.

7. Dispositif de traitement d'informations selon la revendication 6, dans lequel,
les informations d'exécution comportent une image de prévisualisation d'une image photographiée par l'application de photographie, et
l'unité de commande est configurée pour amener l'image de prévisualisation à être affichée sur la base de la position de détection du doigt d'actionnement qui exécute l'opération de déclenchement sur la surface latérale.

8. Dispositif de traitement d'informations selon la revendication 6, dans lequel
les informations d'exécution comportent un dispositif de commande qui commande le traitement de photographie, et
l'unité de commande est configurée pour amener le dispositif de commande à être affiché en fonction de la position de détection du doigt d'actionnement qui exécute l'opération de déclenchement sur la surface latérale.

9. Dispositif de traitement d'informations selon la revendication 6, dans lequel
l'unité de commande est configurée pour amener l'application photographie à exécuter le traitement de photographie après l'écoulement d'une période prédéterminée à compter de la détection de l'opération de déclenchement exécutée par le doigt d'actionnement sur la surface latérale.

10. Dispositif de traitement d'informations selon la revendication 1, dans lequel
l'unité de commande est configurée pour déterminer la région devant recevoir l'opération subséquente sur la surface latérale sur la base de la position de détection d'un doigt de l'utilisateur sur la surface latérale.

11. Dispositif de traitement d'informations selon la revendication 1, dans lequel
l'unité de commande est configurée pour limiter la zone devant recevoir l'opération par le doigt d'actionnement sur la surface latérale en prenant comme référence une hauteur de la position de détection du doigt d'actionnement sur la surface latérale.

12. Procédé de traitement d'informations comprenant :
la détection, par une unité de détection (110), d'un contact d'un doigt d'un utilisateur avec un dispositif de traitement d'informations ;
la détermination, sur la base d'une position de détection d'un doigt d'actionnement d'un utilisateur sur une surface latérale du dispositif de traitement d'informations (10) par rapport à un écran d'affichage (160) du dispositif de traitement d'informations, d'une région devant afficher des informations prédéterminées sur l'écran d'affichage, et la détermination, sur la base de la position de détection, d'une région devant recevoir une opération par le doigt d'actionnement en provenance d'une région qui est une combinaison de l'écran d'affichage et de la surface latérale,
la détermination est réalisée par un processeur (150) ; la détermination d'une région devant afficher des informations prédéterminées sur l'écran d'affichage sur la base de la position de détection du doigt d'actionnement exécutant une opération de déclenchement sur la surface latérale, et la détermination, sur la base de la position de détection, d'une région (R1) devant recevoir une opération ultérieure par le doigt d'actionnement en provenance de la région qui est la combinaison de l'écran d'affichage et de la surface latérale ; et
la détermination, sur la base d'une relation de position entre une pluralité de doigts d'un utilisateur, laquelle relation étant détectée par l'unité de détection (110), de la région (R1) devant recevoir l'opération subséquente et d'une région (R2) ne devant pas recevoir d'opération par un doigt de l'utilisateur.
